# EUROPEAN PATENT APPLICATION

(11) **EP 3 130 267 A1**
(43) Date of publication of application: **15.02.2017**
(21) Application number: 15777134.6
(22) Date of filing: 01.04.2015
(51) Int. Cl.: A47K 3/28, B05B 1/18

(54) **STERILIZING AND PURIFYING SHOWER**

(30) Priority: 08.04.2014 KR 20140041679
(71) Applicant: Asantek Co., Ltd., Changwon-si, Gyeongsangnam-do 642-971 (KR); Hanil Machinery Co., Ltd., Gwangsan-gu Gwangju 62384 (KR)
(72) Inventor: LEE, Sangyoul, Changwon-si Gyeongsangnam-do 645-280 (KR)
(74) Representative: Viering, Jentschura & Partner mbB Patent- und Rechtsanwälte
(86) International application number: PCT/KR2015/003247
(87) International publication number: WO 2015/156534

(57) **Abstract**

Disclosed herein is a sterilizing and purifying shower. The sterilizing and purifying shower includes a grip part, a connection part, a head part, a redox reactor, a purified water supply plate, and a spray plate. The grip part is coupled to a hose on one side thereof. The connection part is connected to the other side of the grip part, and guide water. The head part is formed on one side of the connection part, and contains a plurality of components. The redox reactor is disposed inside the head part, and sterilizes and purifies the water. The purified water supply plate is disposed on one surface of the head part, has a plurality of supply holes, and sprays the sterilized and purified water. The spray plate is disposed on one surface of the purified water supply plate, has a plurality of spray holes, and sprays the water to the outside.

## Description

### Technical Field

The present invention relates to a sterilizing and purifying shower, and more particularly to a sterilizing and purifying shower, in which a redox filter is disposed inside a head part or a grip part and thus water is sterilized and purified and then supplied, and in which an air inflow space is disposed between a purified water supply plate and a spray plate and thus pressure drop is generated by water sprayed through supply nozzles at high speed, with the result that air forcibly enters and thus the water and the air are mixed together and then sprayed.

### Background Art

Generally, a shower is connected to a faucet and discharges water through nozzle holes formed in the head thereof, thereby enabling a shower to be performed.

Since such a shower discharges water through nozzle holes using water pressure, the shower has a problem in that a shower cannot be effectively performed when the amount of water supplied is reduced because water pressure drops and thus the pressure at which water is discharged is weakened.

For this reason, the shower is used in the state in which water pressure is maintained without a reduction in the amount of water supplied to the shower, and thus the shower presents an economical problem resulting in water wastage.

In order to mitigate the above problem, Korean Patent Application Publication No. 10-2011-57992 discloses an air-suction water-saving shower that is capable of saving water because water pressure can be increased by sucking external air when the amount of water supplied to a shower head is reduced.

However, this air-suction water-saving shower has the following problems:

First, water passing through a water discharge tube inside the shower head and external air entering through an external air suction hole beside the water discharge tube are not mixed together, and thus the air-suction water-saving shower has a limitation in that external air cannot effectively increase water pressure.

That is, the external air cannot effectively induce an increase in the pressure of the water supplied through the water discharge tube, and thus the problem of the conventional technology in which water pressure drops when the amount of water supplied is reduced cannot be fundamentally overcome, with the result that the air-suction water-saving shower has a limitation in terms of saving of water.

Furthermore, the external air suction hole is formed through the outside of the water discharge tube, and thus the efficiency of suction of external air is degraded, with the result that the air-suction water-saving shower is not effective for an increase in water pressure and thus has a limitation in terms of saving of water.

Moreover, a filter for purifying water is not contained inside the shower, and thus water treated with a chemical is sprayed onto a user, thereby causing the problem of aggravating the disease of a patient having an atopic disease or a skin disease.

### Disclosure

### Technical Problem

Accordingly, the present invention is intended to overcome the above-described problems of the conventional art, and an object of the present invention is to provide a sterilizing and purifying shower, in which an auxiliary filter and a redox reactor made of a redox reactor material and configured to perform a redox reaction with water are installed in a grip part and a head part, respectively, and sterilize and purify and also save water.

### Technical Solution

In order to accomplish the above object, the present invention provides a sterilizing and purifying shower, including: a grip part configured to have a hollow cylindrical shape, formed to extend vertically, and coupled to a hose on one side thereof; a connection part connected to the other side of the grip part, and configured to guide water, supplied from the hose, to one side; a head part formed on one side of the connection part, and configured to have a hollow cylindrical shape and contain a plurality of components therein; a redox reactor disposed inside the head part, and configured to sterilize and purify the water transferred into the head part; a purified water supply plate disposed on one surface of the head part, formed to have a plurality of supply holes, and configured to spray the sterilized and purified water through the redox reactor by means of water pressure; and a spray plate disposed on one surface of the purified water supply plate, formed to have a plurality of spray holes corresponding to the supply holes, and configured to spray the water, sprayed through the purified water supply plate, to the outside; wherein the purified water supply plate and the spray plate are disposed to be spaced apart by a predetermined distance, and wherein external air enters into an empty space, bubbles are formed in the water, and bubbled water is sprayed.

The redox reactor may include: a filter case configured to have a cylindrical shape and include a ring-shaped hollow portion therein; an absorption wall member disposed on an outer circumferential surface of the filter case, and configured to have a plurality of fine through holes and supply the water thereinto; a redox filter disposed in the hollow portion of the filter case, and configured to sterilize and purify the water through redox reaction with the water; and a plurality of purified water discharge holes formed in a center portion of the filter case in a lateral direction, and configured to guide the water sterilized and purified through the redox filter so that the sterilized and purified water is discharged to an outside.

The sterilizing and purifying shower may further include a distance adjustment member configured to adjust a distance between the purified water supply plate and the spray plate, and the distance adjustment member may be inserted into a reception hole vertically formed through a center of the spray plate, and may be coupled to a center of the purified water supply plate in a screw manner, so that the distance is adjusted through rotation of the distance adjustment member.

The sterilizing and purifying shower may further include an auxiliary filter configured to have a cylindrical shape and sterilize and purify the water through redox reaction with the water inside the hollow portion of the grip part.

The sterilizing and purifying shower may further include an elastic member between the spray plate and the purified water supply plate, and the upper end portion of the elastic member may be disposed inside an upper fastening depression formed to be depressed to one side of the purified water supply plate, and a lower end portion of the elastic member may be disposed inside a lower fastening depression formed to be depressed to one side of the spray plate, so that the spray plate is supported in a downward direction.

### Advantageous Effects

The sterilizing and purifying shower according to the present invention has the following effects:

According to the present invention, the auxiliary filter and the redox reactor using redox reaction are disposed in the grip part and the head part, respectively, and thus a redox reaction with water occurs, thereby achieving the sterilization and purification of water.

Accordingly, water is supplied to the shower in a sterilized and purified state without requiring a separate sterilizing operation, and various users, such as a patient having a skin disease and a user having an atopic disease, can perform washing, thereby achieving the effects of reducing washing time and improving the efficiency of washing.

Furthermore, the air inflow space is formed between the purified water supply plate and the spray plate, and thus external air is mixed with purified water discharged through the supply nozzles to thus generate bubbled water, with the result that the amount of water used can be reduced and with the result that water pressure is increased, thereby improving the efficiency of use attributable to the saving of water.

### Description of Drawings

FIG. 1 is a perspective view showing the configuration of a preferred embodiment of a sterilizing and purifying shower according to the present invention;
FIG. 2 is an exploded perspective view showing the configuration of the preferred embodiment of the sterilizing and purifying shower according to the present invention;
FIG. 3 is a front sectional view showing the configuration of a head part constituting a part of the embodiment of the present invention;
FIG. 4 is a side sectional view showing the configuration of the head part constituting a part of the embodiment of the present invention;
FIG. 5 is a bottom view showing the configuration of a spray plate constituting a part of the embodiment of the present invention;
FIG. 6 is an enlarged sectional view showing the configurations of the spray plate and a purified water supply plate constituting parts of the embodiment of the present invention; and
FIG. 7 is an enlarged sectional view showing the configuration of a distance adjustment member constituting a part of the embodiment of the present invention.

### Best Mode

A preferred embodiment of a sterilizing and purifying shower according to the present invention will be described in detail below with reference to the accompanying drawings.

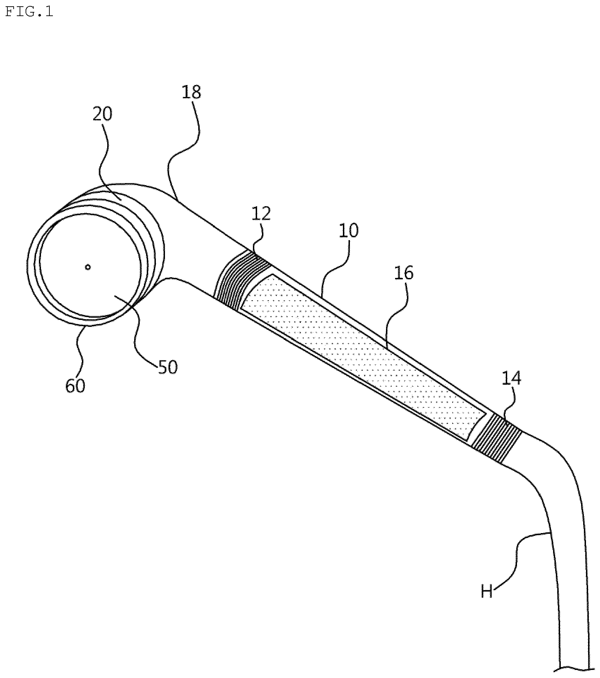

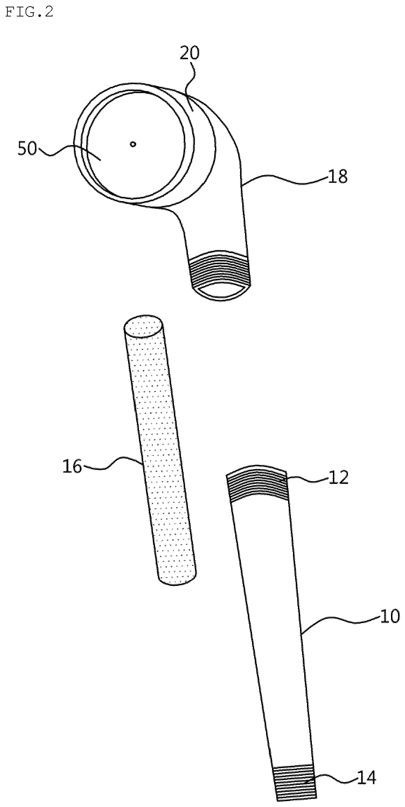

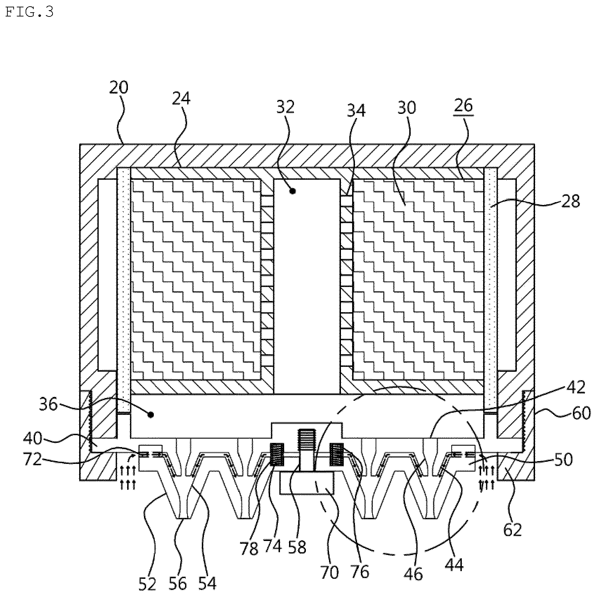

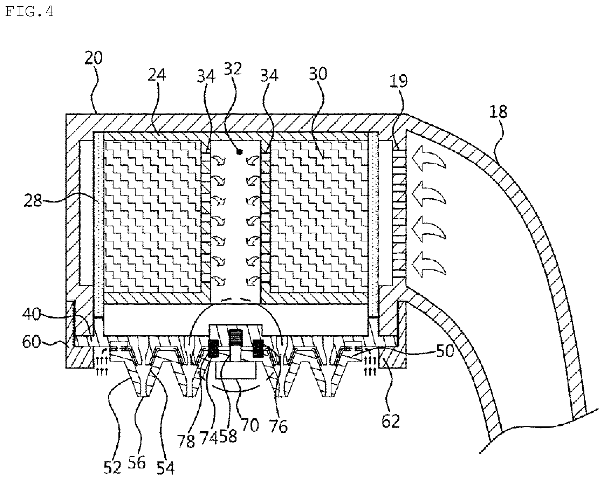

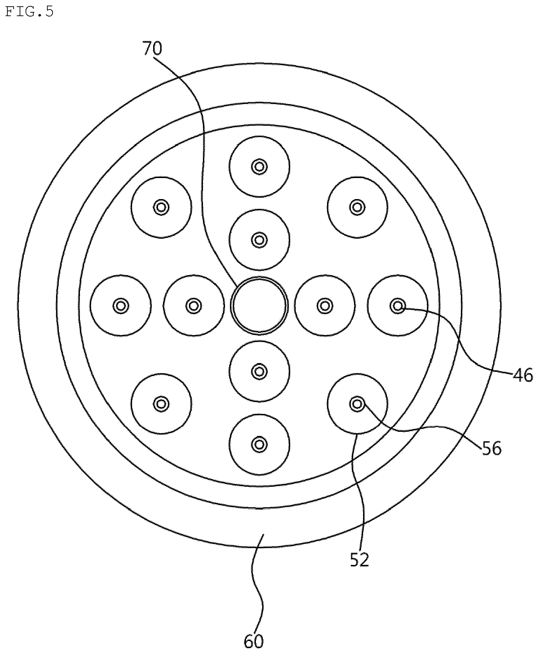

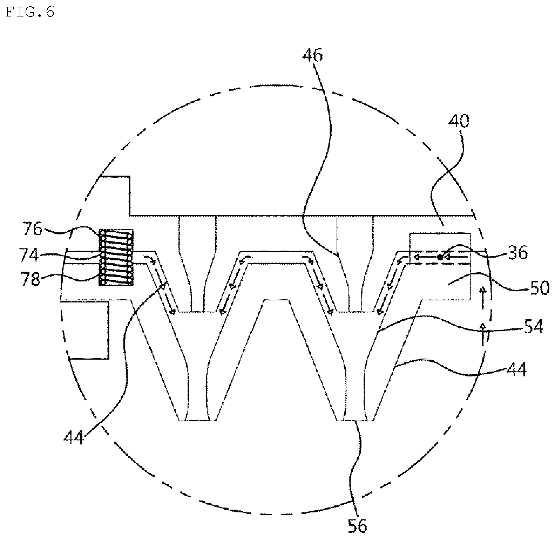

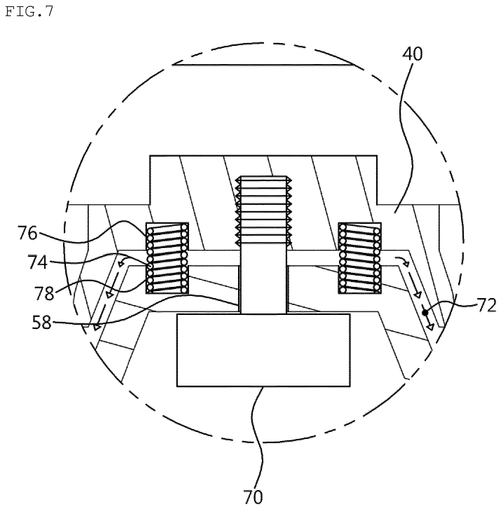

FIG. 1 is a perspective view showing the configuration of a preferred embodiment of a sterilizing and purifying shower according to the present invention, FIG. 2 is an exploded perspective view showing the configuration of the preferred embodiment of the sterilizing and purifying shower according to the present invention, FIG. 3 is a front sectional view showing the configuration of a head part constituting a part of the embodiment of the present invention, FIG. 4 is a side sectional view showing the configuration of the head part constituting a part of the embodiment of the present invention, FIG. 5 is a bottom view showing the configuration of a spray plate constituting a part of the embodiment of the present invention, FIG. 6 is an enlarged sectional view showing the configurations of the spray plate and a purified water supply plate constituting parts of the embodiment of the present invention, and FIG. 7 is an enlarged sectional view showing the configuration of a distance adjustment member constituting a part of the embodiment of the present invention.

As shown in these drawings, the sterilizing and purifying shower according to the present invention includes: a grip part 10 configured to have a hollow cylindrical shape, formed to extend vertically, and coupled to a hose H on one side thereof so that guidance is performed such that water is supplied; a connection part 18 connected to one side of the grip part 10, and configured to transfer the water to one side; a head part 20 formed on one side of the connection part 18, and configured to have a hollow cylindrical shape and contain a plurality of components therein; a redox reactor 22 disposed inside the head part 20, and configured to sterilize and purify the water transferred into the head part 20; a purified water supply plate 40 disposed on one surface of the head part 20, and configured to spray the sterilized and purified water through the redox reactor 22 by means of water pressure; and a spray plate 50 disposed on one side of the purified water supply plate 40 to be spaced by a predetermined distance, and configured to spray the water to the outside; wherein the purified water supply plate 40 and the spray plate 50 are disposed to be spaced apart by a predetermined distance, and wherein external air enters into a space between the purified water supply plate 40 and the spray plate 50, the water and the air are mixed together, and bubbled water is sprayed.

The grip part 10 has a hollow cylindrical shape, and is formed to extend vertically. Couplers 12 and 14 are formed on the outer circumferential surfaces of the upper and lower ends of the grip part 10, and the connection part 18 and the hose H configured to supply water, which will be described later, are coupled and fastened to the upper and lower ends of the grip part 10. The grip part 10 is a part that is gripped by a hand of a user. The user grips the left side of the grip part 10, and manipulates the shower.

The hose H is coupled to the lower portion of the grip part 10. The hose H is a typical hose, and a detailed description of the hose is omitted. One end of the hose H is connected to a water supply source. The other end of the hose H is screwed to the lower end of the grip part 10, and thus the hose H guides water so that the water is supplied into the grip part 10.

An auxiliary filter 16 is disposed inside the grip part 10. The auxiliary filter 16 has a cylindrical shape. The auxiliary filter 16 is composed of fine alloy fibers including two or more metal components each having a high standard reduction potential difference, such as copper, zinc, silver, manganese, nickel, aluminum, etc., and has the effects of sterilizing various types of fungi, sterilizing algae, moss and mold, preventing the attachment of scale, preventing the generation of rust in a pipeline, providing an emulsifying effect, eliminating chlorine components, eliminating heavy metals, eliminating iron ions, and eliminating bad smell by means of a redox reaction.

The connection part 18 is disposed in the upper end coupler 12 of the grip part 10. The connection part 18 has an approximately inverted and reversed "L" shape and a hollow cylindrical shape. The connection part 18 is coupled and fastened to the upper portion of the grip part 10 in a screw manner, and functions to guide water, transferred in an upward direction through the grip part 10, in a forward direction.

The head part 20 is disposed on the front surface of the connection part 18. The head part 20 has a hollow cylindrical shape, and has an opening portion at the lower end thereof, as shown in FIG. 3. A plurality of components are disposed and fastened inside the head part 20.

The redox reactor 22 is disposed inside the head part 20. The redox reactor 22 includes: a filter case 24 configured to have a cylindrical shape and include a ring-shaped hollow portion 26 therein; an absorption wall member 28 disposed on the outer circumferential surface of the filter case 24, and configured to have a plurality of fine through holes and supply the water thereinto; a redox filter 30 disposed in the hollow portion 26 of the filter case 24, and configured to sterilize and purify the water through redox reaction with the water; and a plurality of purified water discharge holes 34 formed in the center portion of the filter case 24 in a lateral direction, and configured to guide the water sterilized and purified through the redox filter 30 so that the sterilized and purified water is discharged to the outside.

The filter case 24 is formed in a cylindrical shape, and the ring-shaped hollow portion 26 is inside the filter case 24. The filter case 24 is supported inside the head part 20 with the redox filter 30 to be described later inserted thereto and fastened therein.

The absorption wall member 28 is disposed along the side surface of the head part 20. The absorption wall member 28 is made of a porous material, and is disposed to surround the side surface of the filter case 24. The plurality of fine through holes is formed through the absorption wall member 28, and the absorption wall member 28 functions to transfer the water, entering through the connection part 18, into the filter case 24.

Furthermore, the absorption wall member 28 is made of porous material, and additionally performs a filtering function of filter out impurities mixed with the water.

The redox filter 30 is disposed inside the filter case 24. The redox filter 30 has a ring shape. The redox filter 30 is composed of fine alloy fibers including two or more metal components each having a high standard reduction potential difference, such as copper, zinc, silver, manganese, nickel, aluminum, etc., and has the effects of sterilizing various types of fungi, sterilizing algae, moss and mold, preventing the attachment of scale, preventing the generation of rust in a pipeline, providing an emulsifying effect, eliminating chlorine components, eliminating heavy metals, eliminating iron ions, and eliminating bad smell by means of a redox reaction.

The sterilization and the purification are performed through redox reaction with the water that enters into the redox filter 30.

A discharge flow path 32 is formed in the center of the filter case 24. The discharge flow path 32 has a hollow cylindrical shape whose lower end is open, and the plurality of purified water discharge holes 34 is formed through the side surface of the discharge flow path 32.

That is, the water having passed through the absorption wall member 28 is sterilized and purified via the redox filter 30, and the sterilized and purified water is guided to the discharge flow path 32 via the purified water discharge holes 34.

A purified water inflow space 36 into which the sterilized and purified water enters is formed under the redox reactor 22. The purified water inflow space 36 is a space in which the purified water discharged through the discharge flow path 32 is stored, and is a part in which the water is stored along the discharge flow path 32.

The purified water supply plate 40 is disposed under the purified water inflow space 36. The purified water supply plate 40 is formed in a disk shape having a predetermined thickness. A plurality of supply holes 42 is formed through the top surface of the purified water supply plate 40, and the purified water supply plate 40 functions to guide the purified water stored in the purified water inflow space 36 so that the purified water is discharged to the outside.

A plurality of supply nozzles 44 is formed through the bottom surface of the purified water supply plate 40. The supply nozzles 44 are each formed in an approximately cone shape, and a speed increasing flow path 46 is formed inside each of the plurality of supply nozzles 44. The speed increasing flow path 46 is vertically formed through each of the plurality of supply nozzles 44. The speed increasing flow path 46 is gradually narrowed in a direction from the top thereof to the bottom thereof. The speed of the purified water supplied into the speed increasing flow path 46 is increased, and the purified water whose speed has been increased is discharged to the outside.

That is, the purified water entering through the supply holes 42 of the purified water supply plate 40 moves through the speed increasing flow paths 46 of the supply nozzles 44 downward, the speed of the purified water is increased, and the purified water whose speed has been increased is discharged to the outside.

The spray plate 50 is disposed to be spaced apart from the purified water supply plate 40. The spray plate 50 is formed in a disk shape having a predetermined thickness, and a plurality of spray nozzles 52 each protruding in an approximately cone shape are formed on the bottom surface of the spray plate 50. The spray plate 50 is a portion where the purified water discharged out of the supply nozzle 44 is mixed with air to thus form bubbled water and the bubbled water is sprayed to the outside.

The plurality of spray nozzles 52 each protruding in an approximately cone shape is formed on the bottom surface of the spray plate 50. The spray nozzles 52 are formed at the same locations as the supply nozzle 44, and accommodation depressions 54 each depressed in a cone shape to accommodate the supply nozzles 44 are formed inside the spray nozzles 52. Spray holes 56 vertically formed through the lower ends of the spray nozzles 52 are formed at the lower ends of the spray nozzles 52. The purified water whose speed has been increased via the supply nozzles 44 is supplied to the spray holes 56, is mixed with air, and is discharged to the outside.

A head cover 60 is disposed under the purified water supply plate 40. The head cover 60 has a hollow cylindrical shape. A caught end 62 protruding inward is formed on the bottom surface of the head cover 60, and the head cover 60 is coupled and fastened to the outer circumferential surface of the lower end of the head part 20 in a screw manner. The head cover 60 functions to fasten the purified water supply plate 40 to the lower end of the head part 20.

A distance adjustment member 70 is disposed at the center of the spray plate 50. The distance adjustment member 70 is a typical screw, and a detailed description thereof is omitted. The distance adjustment member 70 is disposed through the reception hole 58 of the spray plate 50, and is fastened in such a manner that a screw portion on the upper end of the distance adjustment member 70 is screwed into the center of the purified water supply plate 40. The amount of air to be included in the sprayed bubbled water can be adjusted in such a manner that a user directly the distance adjustment member 70 to the left or right.

That is, when the distance adjustment member 70 is moved upward through rotation, an air inflow space 72 to be described later is narrowed, and thus the amount of air to enter is reduced. When the distance adjustment member 70 is moved downward, the air inflow space 72 is widened, and thus the amount of air to enter is increased, with the result that bubbled water including a lot of oxygen can be supplied.

An elastic member 74 is disposed between the purified water supply plate 40 and the spray plate 50. The elastic member 74 is a typical spring, and a detailed description thereof is omitted. In addition to the spring, various mechanisms having elastic force may be used as the elastic member 74. The upper end portion of the elastic member 74 is disposed inside an upper fastening depression 76 formed to be depressed to one side of the purified water supply plate 40, and the lower end of the elastic member 74 is disposed inside a lower fastening depression 78 formed to be depressed to one side of the spray plate 50. The elastic member 74 is disposed inside the upper fastening depression 76 and the lower fastening depression 78, and functions to elastically support the spray plate 50 in a downward direction.

The air inflow space 72 is formed between the purified water supply plate 40 and the spray plate 50. The air inflow space 72 is a space located over a predetermined distance between the purified water supply plate 40 and the spray plate 50. External air is supplied into a space between the purified water supply plate 40 and the spray plate 50 through the air inflow space 72, the purified water and the air are mixed together to thus generate bubbled water, and the bubbled water is discharged to the outside.

The operation of the sterilizing and purifying shower of the present invention having the above-described configuration will be described with reference to FIGS. 1 to 7.

First, the water of a water supply source is transferred through the hose, and the supplied water is primarily filtered via the auxiliary filter 16 disposed inside the grip part 10. The auxiliary filter 16 primarily sterilizes and purifies the water through redox reaction with water, and the primarily purified water is moved along the connection part 18 and supplied to the head part 20.

The grip part 10 is screwed to the hose H and the connection part 18, and the auxiliary filter 16 disposed inside the grip part 10 is selectively mounted and used by a user. Furthermore, when the head part 20 has a space insufficient to accommodate the redox reactor 22, the redox reactor 22 may not be disposed in the head part 20, but only the auxiliary filter 16 may be disposed in the grip part 10 and be then used.

The water having passed through the connection part 18 passes through the discharge holes 19, and is transferred into the head part 20. The water supplied into the head part 20 passes through the absorption wall member 28 made of porous material disposed along the side surface of the redox reactor 22, and enters into the redox reactor 22.

Furthermore, the water is secondarily filtered while passing through the absorption wall member 28 made of porous material, and the water having passed through the absorption wall member 28 enters into the redox reactor 22. The water having entering into the redox reactor 22 is sterilized and purified by the redox filter 30. The redox filter 30 sterilizes and purifies the water through redox reaction with water. The redox filter 30 is composed of fine fibers, and eliminates impurities included in the water.

The water having passed through the redox filter 30 is sterilized and purified, and is moved into the purified water inflow space 36 through the purified water discharge holes 34. The water stored in the purified water inflow space 36 is supplied into the supply holes 42 of the purified water supply plate 40 by means of water pressure.

The speed of the purified water having entered into the supply holes 42 is increased while the purified water is passing through the speed increasing flow paths 46 of the supply nozzles 44, the purified water having passed through the speed increasing flow paths 46 is sprayed downward via the supply nozzles 44, and external air is supplied under the supply nozzles 44 through the air inflow space 72. The purified water and the air having passed through the supply nozzles 44 are mixed to thus generate bubbled water, and the bubbled water is sprayed to the outside through the spray holes 56 of the spray nozzles, with the result that a user can use the bubbled water.

Furthermore, to adjust the amount of influent air to be included in bubbled water, a user may adjust the distance of the air inflow space 72 by rotating the distance adjustment member 70, thereby generating bubbled water by adjusting the amount of influent air to be included in the purified water as desired.

The scope of the present invention is not limited to the illustrated embodiments. Many other variations based on the present invention will be apparent to those having ordinary skill in the art within the above-described technical range.

## Claims

1. A sterilizing and purifying shower, comprising:
a grip part (10) configured to have a hollow cylindrical shape, formed to extend vertically, and coupled to a hose (H) on one side thereof;
a connection part (18) connected to a remaining side of the grip part (10), and configured to guide water, supplied from the hose (H), to one side;
a head part (20) formed on one side of the connection part (18), and configured to have a hollow cylindrical shape and contain a plurality of components therein;
a redox reactor (22) disposed inside the head part (20), and configured to sterilize and purify the water transferred into the head part (20);
a purified water supply plate (40) disposed on one surface of the head part (20), formed to have a plurality of supply holes (42), and configured to spray the sterilized and purified water through the redox reactor (22) by means of water pressure; and
a spray plate (50) disposed on one surface of the purified water supply plate (40), formed to have a plurality of spray holes (56) corresponding to the supply holes (42), and configured to spray the water, sprayed through the purified water supply plate (40), to the outside;
wherein the purified water supply plate (40) and the spray plate (50) are disposed to be spaced apart by a predetermined distance, and wherein external air enters into an empty space, bubbles are formed in the water, and bubbled water is sprayed.

2. The sterilizing and purifying shower of claim 1, wherein the redox reactor (22) comprises:
a filter case (24) configured to have a cylindrical shape and include a ring-shaped hollow portion (26) therein;
an absorption wall member (28) disposed on an outer circumferential surface of the filter case (24), and configured to have a plurality of fine through holes and supply the water thereinto;
a redox filter (30) disposed in the hollow portion (26) of the filter case (24), and configured to sterilize and purify the water through redox reaction with the water; and
a plurality of purified water discharge holes (34) formed in a center portion of the filter case (24) in a lateral direction, and configured to guide the water sterilized and purified through the redox filter (30) so that the sterilized and purified water is discharged to an outside.

3. The sterilizing and purifying shower of claim 1, further comprising a distance adjustment member (70) configured to adjust a distance between the purified water supply plate (40) and the spray plate (50), wherein the distance adjustment member (70) is inserted into a reception hole (58) vertically formed through a center of the spray plate (50), and is coupled to a center of the purified water supply plate (40) in a screw manner, so that the distance is adjusted through rotation of the distance adjustment member (70).

4. The sterilizing and purifying shower of claim 1, further comprising an auxiliary filter (16) configured to have a cylindrical shape and sterilize and purify the water through redox reaction with the water inside a hollow portion of the grip part (10).

5. The sterilizing and purifying shower of claim 3, further comprising an elastic member (74) between the spray plate (50) and the purified water supply plate (40), wherein an upper end portion of the elastic member (74) is disposed inside an upper fastening depression (76) formed to be depressed to one side of the purified water supply plate (40), and a lower end portion of the elastic member (74) is disposed inside a lower fastening depression (78) formed to be depressed to one side of the spray plate (50), so that the spray plate (50) is supported in a downward direction.
